# EUROPEAN PATENT APPLICATION

(11) **EP 4 815 005 A1**
(43) Date of publication of application: **30.09.2026**
(21) Application number: 25165836.5
(22) Date of filing: 25.03.2025
(51) Int. Cl.: H01F 27/28, H01F 27/40, H01F 3/10, H01F 27/38, H02M 3/00, H01F 3/14

(54) **TRANSFORMER ARRANGEMENT**

(71) Applicant: Tridonic GmbH & Co. KG, 6851 Dornbirn (AT)
(72) Inventor: Schneider, Miguel Philipp, 6851 Dornbirn (AT); Lochmann, Frank, 6851 Dornbirn (AT)
(74) Representative: Rupp, Christian

(57) **Abstract**

The invention relates to a transformer arrangement (10). The transformer arrangement (10) comprises four inner core legs (11) which are arranged in a square configuration; four outer core legs (12) wherein each outer core leg (12) is arranged adjacent to a side face of the square configuration of the inner core legs (11); at least one primary winding (13) which is arranged around the square configuration of the inner core legs (11); and a plurality of secondary windings (14, 15), wherein each secondary winding (14, 15) is arranged around a respective one of the inner core legs (11) or the outer core legs (12).

## Description

### TECHNICAL FIELD OF THE INVENTION

The invention relates to a transformer arrangement and to an electrical power converter comprising such a transformer arrangement.

### BACKGROUND OF THE INVENTION

Transformers are essential elements in many power converters. They allow for an efficient energy transfer between different circuit stages of the converter and are used in many converter applications, such as switched mode power supplies, to regulate voltage levels.

Matrix transformers are a special kind of transformers which comprise a plurality of transformer elements, e.g. multiple cores, arranged in a specific pattern (e.g., along an axis). Such matrix transformers can distribute the output current evenly among their transformer elements.

However, many conventional matrix transformers suffer under relatively high energy losses, especially when used in high power applications such as high power DC/DC converters. Furthermore, the various transformer elements can take up a significant amount of space, reducing the power density of the transformer.

### SUMMARY OF THE INVENTION

Thus, it is an object of the invention to provide an improved transformer arrangement with an increased efficiency and a high power density.

The object is achieved by the solution provided in the enclosed independent claims. Advantageous implementations of the present invention are further defined in the dependent claims.

According to a first aspect, the invention relates to a transformer arrangement. The transformer arrangement comprises four inner core legs which are arranged in a square configuration; four outer core legs, wherein each outer core leg is arranged adjacent to a side face of the square configuration of the inner core legs; at least one primary winding which is arranged around the square configuration of the inner core legs; and a plurality of secondary windings, wherein each secondary winding is arranged around a respective one of the inner core legs or the outer core legs.

This achieves the advantage that the transformer arrangement can be compact in size, whereby the primary winding(s) can efficiently couple to all secondary windings. As a consequence, the transformer arrangement can achieve a high efficiency and a high power density.

The transformer arrangement can comprise eight secondary windings, one for each core leg.

In an implementation form, the at least one primary winding is magnetically coupled to the plurality of secondary windings.

In an implementation form, the transformer arrangement comprises a number of yokes arranged to alternately connect the outer core legs and the inner core legs. For instance, the transformer legs and the yokes form a closed ring.

In an implementation form, each yoke is arranged to connect one inner core leg with one adjacent outer core leg.

In an implementation form, the yokes are alternately arranged on a top side and a bottom side of the inner and outer core legs.

In an implementation form, the transformer arrangement further comprises a printed circuit board (PCB); wherein the at least one primary winding and/or the secondary windings are formed by conductive lines on the PCB. This achieves the advantage that the transformer arrangement can have compact design and offer a high power destiny.

The conductive lines forming the first winding and/or secondary windings can be arranged in spiral patterns on the PCB.

For instance, the transformer arrangement is a planar transformer. The inner and/or outer core legs can pass through the PCB.

In an implementation form, the conductive lines forming the at least one primary winding and/or the secondary windings are arranged in multiple layers on top of each other on the PCB.

Thereby, the conductive lines forming the secondary windings can be electrically connected in parallel.

In an implementation form, the transformer arrangement can comprise a plurality of synchronous rectifiers, wherein each synchronous rectifier is electrically connected to one of the secondary windings.

In an implementation form, each synchronous rectifier is arranged above or below the conductive lines which form the secondary winding it is electrically connected to.

In an implementation form, each synchronous rectifier comprises a switch. This achieves the advantage that losses can be reduced, especially compared to the use of diodes in the synchronous rectifiers.

According to a second aspect, the invention relates to an electrical power converter comprising a transformer arrangement according to the first aspect.

For instance, the electrical power converter can be a high-power DC-DC converter.

In an implementation form, the electrical power converter is a resonant converter, in particular an LLC converter.

### BRIEF DESCRIPTION OF THE DRAWINGS

Exemplary embodiments of the invention are now further explained with respect to the drawings by way of example only, and not for limitation. In the drawings:
- Fig. 1: shows a top view of a transformer arrangement according to an embodiment;
- Fig. 2: shows a side view of a core leg of a transformer arrangement according to an embodiment;
- Fig. 3: shows a perspective view of core legs of a transformer arrangement according to an embodiment; and
- Fig. 4: shows a circuit diagram of an electrical power converter according to an embodiment.

### DETAILED DESCRIPTION OF EMBODIMENTS

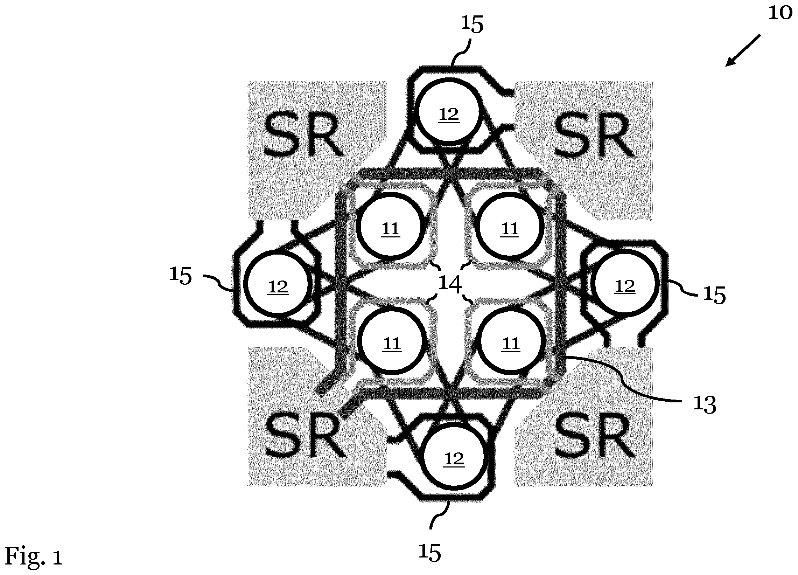

Fig. 1 shows a top view of a transformer arrangement 10 according to an embodiment.

The transformer arrangement comprises four inner core 11 legs which are arranged in a square configuration; four outer core legs 12, wherein each outer core leg 12 is arranged adjacent to a side face of the square configuration of the inner core legs 11; at least one primary winding 13 which is arranged around the square configuration of the inner core legs 11; and a plurality of secondary windings 14, 15, wherein each secondary winding 14, 15 is arranged around a respective one of the inner core legs 11 or the outer core legs 12.

For example, the transformer arrangement 10 comprises eight secondary windings 14, 15: one secondary winding 14 around each inner core leg 11 and one secondary winding 15 around each outer core leg 12. The secondary windings 14, 15 can be connected in parallel to each other.

The primary winding 13 could be formed by a single winding or multiple winding elements which are connected in series.

The at least one primary winding 13 can be magnetically coupled to the plurality of secondary windings 14, 15, i.e., to each of the plurality of secondary windings 14, 15.

The winding ratio of each secondary winding 14, 15 to the primary winding 13 can be 1:1. In this way, the energy can be disturbed evenly on the secondary side of the transformer arrangement 10. However, also other winding ratios between primary and secondary windings are possible.

The inner and outer core legs 11, 12 (also called: core limbs) can be arranged in the form of a four-pointed star. With this design, the transformer arrangement 10 is particularly compact, wherein the primary winding(s) 13 can efficiently couple to all secondary windings 14, 15. As a consequence, a high efficiency of the transformer operation and a high power density can be achieved.

In particular, this arrangement of the core legs 11, 12 and windings 13, 14, 15 allows reducing the length of the conductive lines both on the primary and the secondary side of the transformer. In this way, losses, in particular ohmic losses, can be reduced.

This transformer arrangement 10 can form a matrix transformer.

The inner and outer core legs 11, 12 can be made of a suitable transformer core material, such as ferrite or silicon steel.

The transformer arrangement 10 can further comprise a number of synchronous rectifiers SR. Each synchronous rectifier SR can be electrically connected to at least one of the secondary windings 14, 15. For instance, the transformer arrangement comprises one synchronous rectifier SR for each core leg 11, 12 respectively secondary winding 14, 15.

For example, the synchronous rectifiers SR are arranged at the corners of the transformer arrangement 10, resulting in an overall square shape of the transformer arrangement 10, as e.g. shown in Fig. 1. However, also other arrangements of the rectifiers SR are possible.

Each synchronous rectifiers SR can comprise at least one switch. This can reduce losses, especially compared to rectification with only diodes on the secondary side of the transformer arrangement.

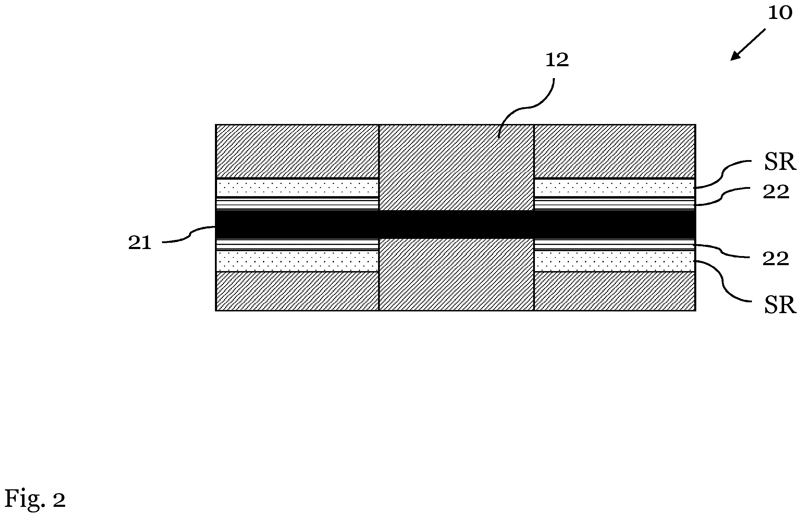

Fig. 2 shows a side view of a core leg 12 of the transformer arrangement 10 according to an embodiment. In the example shown in Fig. 2, this core leg 12 is an outer core leg. However, the inner core legs 11 could have essentially the same design.

As shown in Fig. 2, the transformer arrangement can comprise a printed circuit board (PCB) 21. The at least one primary winding 13 and/or the secondary windings 14, 15 can be formed by conductive lines on this PCB 21. Hence, the transformer arrangement can be a planar transformer.

The PCB 21 can be arranged perpendicular to a longitudinal direction of the inner and the outer core legs 11, 12. For instance, the inner and outer core legs 11, 12 are cylindrically shaped and have a certain longitudinal height and diameter. The PCB 21 can be arranged perpendicular to the "height direction".

The core legs 11, 12 of the transformer arrangement can pass through the PCB 21.

The conductive lines forming the first winding and/or secondary windings 13, 14, 15 can be arranged in spiral patterns on the PCB 21. In particular, the conductive lines forming the secondary windings 14, 15 can be electrically connected in parallel.

Furthermore, the conductive lines forming the at least one primary winding 13 and/or the secondary windings 14, 15 can be arranged in multiple layers 22 on top of each other on the PCB. The layers 22 can be arranged on one side of the PCB 21 or on both sides, as shown in Fig. 2. The conductive lines forming a single primary or secondary winding can be arranged on one layer or on multiple layers 22 on top of each other (and electrically to connected with each other).

For instance, the PCB 21 can comprise at least 14 layers 22. The conductive lines forming the first and/or secondary windings 13, 14, 15 can be formed by conductive tracks or traces on the PCB 21.

Each synchronous rectifier SR can be arranged above or below the conductive lines forming the secondary winding 14, 15 it is connected to. For example, as indicated in Fig. 2, a synchronous rectifier SR can be arranged in a layer above or below the layer comprising its corresponding secondary winding 14, 15.

Preferably, the synchronous rectifiers SR are arranged such that their outputs are in close proximity to each other. In this way, the overall length of conductor lines in the transformer arrangement 10 can be further reduced. At the same time the synchronous rectifiers SR can be arranged closely to the secondary windings 14, 15, e.g., above or below as explained above, which allows for a further reduction of conductor line lengths.

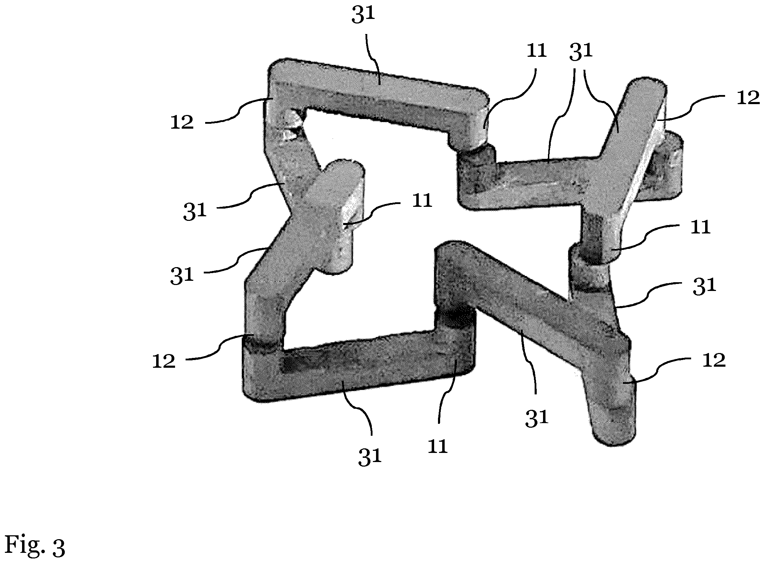

Fig. 3 shows a perspective view of the core legs 11, 12 of the transformer arrangement 10 according to an embodiment. The windings 13, 14, 15, as well as any other components are omitted in this figure.

As shown in Fig. 3, the transformer arrangement 10 comprises a number of yokes 31 arranged to alternately connect the outer core legs and the inner core legs. These yokes 31 are also indicated by solid lines connecting the core legs 11, 12 in Fig. 1.

The yokes 31 can be bridging elements which are made of the same material (or a material with similar magnetic properties) as the core legs 11, 12.

For instance, each yoke 31 is arranged to connect one inner core leg with one adjacent outer core leg. Thereby, the yokes 31 can be alternately arranged on a top side and a bottom side of the inner and outer core legs. Thus, the transformer legs 11, 12 and the yokes 31 can form a closed ring.

For example, an inner core leg 11, a connecting yoke 31 and an outer core leg 12 can form a U-shaped core segment of the transformer arrangement 10. In the exemplary embodiment of Fig. 3, the structure of core legs 11, 12 and yokes 31 is assembled from several U-shaped core segments, whereby a certain offset of the stacked segments is visible. However, this assembly is merely an example to visualize the overall arrangement of the components. In the final transformer arrangement 10, for instance, no offset exists within the core legs 11, 12.

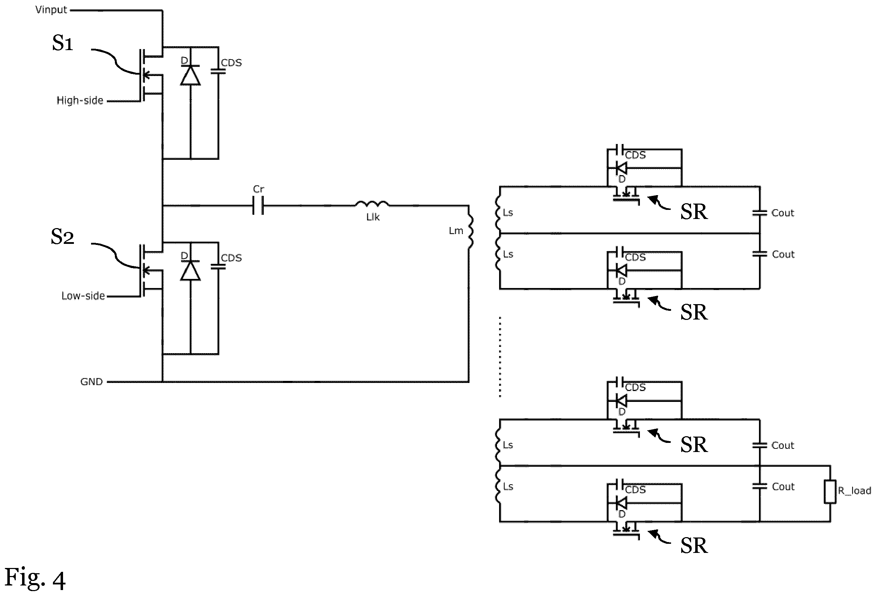

Fig. 4 shows a circuit diagram of an electrical power converter comprising the transformer arrangement 10 according to an embodiment.

The electrical power converter in Fig. 4 is an LLC converter. However, the transformer arrangement 10 could also be integrated in other resonant converter architectures.

The exemplary converter in Fig. 4 comprises a switching stage with a high side switch S1 and a low side switch S2. A respective diode D and a capacitor CDS is connected in parallel to each switch. The converter further comprises a resonant tank with a resonant capacitor Cr a resonant inductor Llk and a magnetization inductor Lm. This inductor Lm can be formed by or connected to the primary winding 13 of the transformer arrangement 10. On the secondary side, the converter comprises a number of secondary windings Ls, which can be formed by the secondary windings 14, 15 of the transformer arrangement 10.

The primary winding 13 is arranged around multiple core legs of the transformer arrangement 10. Thereby, parts of the primary windings can be arranged according to the respective secondary windings Ls they are magnetically coupled to.

The secondary windings Ls can be connected in parallel, wherein each secondary winding is connected to a synchronous rectifier SR which can comprise a switch with a diode D and capacitor CDS connected in parallel. The converter can further comprise a number of output capacitors Cout which can smooth an output voltage before forwarding it to a load R_load.

For instance, the electrical power converter can be a high-power DC-DC converter or a component thereof. In particular, the electrical power converter could be an IBC (intermediate bus converter) module. Such a high power converter can benefit from the compact design and high power density of the transformer arrangement 10.

The electrical power converter can be used for power delivery to a CPU, a GPU or another component with a high power demand, e.g., in a datacenter environment.

Although the invention has been illustrated and described with respect to one or more implementations, equivalent alternations and modifications will occur to those skilled in the art upon the reading of the understanding of the specification and the annexed drawings. In addition, while a particular feature of the invention may have been disclosed with respect to only of the several implementations, such features may be combined with one or more other features of the other implementations as may be desired and advantage for any given or particular application.

## Claims

1. A transformer arrangement (10), comprising:
four inner core legs (11) which are arranged in a square configuration;
four outer core legs (12) wherein each outer core leg (12) is arranged adjacent to a side face of the square configuration of the inner core legs (11);
at least one primary winding (13) which is arranged around the square configuration of the inner core legs (11); and
a plurality of secondary windings (14, 15), wherein each secondary winding (14, 15) is arranged around a respective one of the inner core legs (11) or the outer core legs (12).

2. The transformer arrangement (10) of claim 1,
wherein the at least one primary winding (13) is magnetically coupled to the plurality of secondary windings (14, 15).

3. The transformer arrangement (10) of claim 1 or 2,
a number of yokes (31) arranged to alternately connect the outer core legs (12) and the inner core legs (11).

4. The transformer arrangement (10) of claim 3,
wherein each yoke (31) is arranged to connect one inner core leg (11) with one adjacent outer core leg (12).

5. The transformer arrangement (10) of any one of the preceding claims,
wherein the yokes (31) are alternately arranged on a top side and a bottom side of the inner and outer core legs (11, 12).

6. The transformer arrangement (10) of any one of the preceding claims, further comprising:
a printed circuit board, PCB (21);
wherein the at least one primary winding (13) and/or the secondary windings (14, 15) are formed by conductive lines on the PCB (21).

7. The transformer arrangement (10) of claim 6,
wherein the conductive lines forming the at least one primary winding (13) and/or the secondary windings (14, 15) are arranged in multiple layers (22) on top of each other on the PCB (21).

8. The transformer arrangement (10) of any one of the preceding claims, further comprising:
a plurality of synchronous rectifiers (SR), wherein each synchronous rectifier (SR) is electrically connected to one of the secondary windings (14, 15).

9. The transformer arrangement (10) of claim 8 and of claim 5 or 7,
wherein each synchronous rectifier (SR) is arranged above or below the conductive lines forming the secondary winding (14, 15) it is electrically connected to.

10. The transformer arrangement (10) of claim 8 or 9,
wherein each synchronous rectifier (SR) comprises a switch.

11. An electrical power converter comprising a transformer arrangement (10) of any one of the preceding claims.

12. The electrical power converter of claim 11,
wherein the electrical power converter is a resonant converter, in particular an LLC converter.
